# EUROPÄISCHE PATENTSCHRIFT

(11) **EP 1 193 113 B1**
(45) Veröffentlichungstag und Bekanntmachung des Hinweises auf die Patenterteilung: **22.09.2004**
(21) Anmeldenummer: 01120111.8
(22) Anmeldetag: 22.08.2001
(51) Int. Cl.: B60N 2/38, B60N 2/46

(54) **Fahrzeugsitz**
Vehicle seat
Siège de véhicule

(30) Priorität: 30.08.2000 DE 10042530
(43) Veröffentlichungstag der Anmeldung: 03.04.2002
(73) Patentinhaber: GRAMMER AG, 92224 Amberg (DE)
(72) Erfinder: Ott, Richard, 92245 Kümmersbruck (DE); Haller, Nikolaus, 92250 Ammerthal (DE); Meiller, Hermann, 92533 Wernberg-Köblitz (DE)
(74) Vertreter: LOUIS- PÖHLAU- LOHRENTZ

(56) Entgegenhaltungen:
- DE-A- 3 046 049
- DE-U- 29 804 359
- FR-A- 2 148 736
- US-A- 2 793 678
- US-A- 5 290 092

## Beschreibung

Die Erfindung betrifft einen Fahrzeugsitz mit einer Rückenlehne.

Insbesondere bei Staplerfahrem oder Traktorfahrern ist es häufig erforderlich, sich nach rückwärts zu wenden, um entsprechende Arbeiten durchzuführen. Gleiches kann auch für Lkw-Fahrer gelten. Zu diesem Zwecke ist aus der DE 298 04 359 U1 ein Fahrzeugsitz bekannt, bei dem die beiden Seitenränder jeweils mit einer Einbuchtung ausgebildet sind. Hierdurch wird für die Ellbogen der Arme des Sitzbenutzers ein Freiraum geschaffen, so daß es dem Sitzbenutzer möglich ist, sich aus der Fahrtrichtung nach rückwärts zu wenden.

Aus der DE 30 46 049 A1 ist ein Sitz mit einer Rückenlehne bekannt, wobei die Rückenlehne oder zumindest der obere Abschnitt der Rückenlehne um eine vertikale Achse verschwenkbar ist. Damit soll eine mit dem jeweiligen Einsatz verbundene Sitz-Anpassung an den Sitzbenutzer erreicht werden.

Stühle mit Rückenlehnen, die an ihren beiden Seitenrändem jeweils eine Einbuchtung aufweisen, sind aus der FR-A-1 415 648 und aus der US-A-2 031 883 bekannt.

Aus der gattungsbildenden US-A-2 793 678 ist ein Farzeugsitz mit einer Rückenlehne bekannt, an deren Rückseite eine Unterarm-Auflage vorgesehen ist. Mit diesem bekannten Fahrzeugsitz ergibt sich insbesondere bei relativ kurzer Rückenlehne der Vorteil, daß der Sitzbenutzer in der nach ruckwarts gewandien Sitzposition den ment zum Lenken des Fahrzeuges benötigten Unterarm auf der an der Rückseite der Rückenlehne vorgesehenen Unterarm-Auflage auflegen kann, so daß eine optimale Abstützung erreicht und eine Ermüdung des nicht zum Fahrzeuglenken benötigten freien Arms vermieden wird.

Der Erfindung liegt die Aufgabe zugrunde, einen Fahrzeugsitz zu schaffen, mit welchem bei einer Orientierung des Sitzbenutzers nach rückwärts der Komfort insbesondere bei einer relativ breiten bzw. hohen Rückenlehne weiter verbessert ist.

Diese Aufgabe wird bei einem Fahrzeugsitz der aus der o.g. US-A-2 793 678 genannten Art erfindungsgemäß dadurch gelöst, daß mindestens ein Seitenrand der Rückenlehne eine Einbuchtung aufweist, die zur Aufnahme eines Oberarms bzw. des dazu benachbarten Schulterbereiches eines Sitzbenutzers dient, wenn sich dieser aus der Fahrtrichtung nach rückwärts wendet, wobei die an der Rückseite der Rückenlehne vorgesehene Unterarm-Auflage der Seitenrand-Einbuchtung zugeordnet ist.

Selbstverständlich kann der Erfindungsgedanke auch bei Fahrzeugsitzen mit relativ kurzer Rückenlehne zur Anwendung gelangen.

Der erfindungsgemäße Fahrzeugsitz weist also einen optimalen Benutzer-Komfort auf.

Bei dem erfindungsgemäßen Fahrzeugsitz kann die Rückenlehne nur an einem seiner beiden Seitenränder eine Einbuchtung aufweisen, der an der Rückseite der Rückenlehne eine Unterarm-Auflage zugeordnet ist. Bei einem sogenannten linksgelenkten Fahrzeug befindet sich die Einbuchtung (in Fahrtrichtung gesehen) üblicherweise am rechten Seitenrand der Rückenlehne des Fahrzeugsitzes. Bei einem rechtsgelenkten Fahrzeug befindet sich die Einbuchtung üblicherweise am linken Seitenrand der Rückenlehne des Fahrzeugsitzes. Selbstverständlich ist die Erfindung nicht auf diese beiden Alternativen beschränkt.

Bei dem erfindungsgemäßen Fahrzeugsitz kann die Unterarm-Auflage von dem jeweiligen Seitenrand der Rückenlehne bis zu einem mittleren Bereich der Rückseite der Rückenlehne verlaufen. Als zweckmäßig hat es sich hierbei erwiesen, wenn die Unterarm-Auflage von dem jeweiligen Seitenrand zum mittleren Bereich der Rückseite der Rückenlehne schräg nach oben verläuft, weil hierdurch eine optimale Anpassung an die anatomischen Gegebenheiten des jeweiligen Sitzbenutzers erreicht wird. Als besonders zweckmäßig hat es sich erwiesen, wenn die Unterarm-Auflage von dem jeweiligen Seitenrand zum mittleren Bereich der Rückseite der Rückenlehne mit einer konvex aufgewölbten Unterarm-Auflagefläche ausgebildet ist.

Bei dem erfindungsgemäßen Fahrzeugsitz kann die Rückenlehne einen formstabilen flächigen Rückenlehnenträger aufweisen, an dem die Unterarm-Auflage vorgesehen ist, und der vorderseitig mit einem Rückenlehnen-Polsterteil versehen ist. Bei einer derartigen Ausbildung des erfindungsgemäßen Fahrzeugsitzes kann die Unterarm-Auflage einen formstabilen Auflagekörper aufweisen, der mit einer Auflagepolsterung bedeckt ist. Der formstabile Auflagekörper der Unterarm-Auflage kann hierbei ein selbständiges Teil sein, das am Rückenlehnenträger der Rückenlehne befestigt ist. Desgleichen ist es möglich, daß der formstabile Auflagekörper der Unterarm-Auflage ein integrales Bestandteil des Rückenlehnenträgers der Rückenlehne ist. Auf diese Weise wird ein Montageaufwand, wie er beim Befestigen eines selbständigen formstabilen Auflagekörpers der Unterarm-Auflage am Rückenlehnenträger notwendig ist, vermieden.

Um den erfindungsgemäßen Fahrzeugsitz sowohl bei rechtsgelenkten als auch bei linksgelenkten Fahrzeugen problemlos zum Einsatz bringen zu können, kann der Rückenlehnenträger mit zwei spiegelbildlich symmetrischen Seitenrandkonturen - mit oder ohne Einbuchtung(en) - ausgebildet sein. Hierdurch wird die Herstellung der Rückenlehnenträger für erfindungsgemäße Fahrzeugsitze und deren Lagerhaltung vereinfacht. Ist der erfindungsgemäße Fahrzeugsitz mit einer Einbuchtung ausgebildet, dann kann diese einseitige Einbuchtung der Rückenlehne durch ein spiegelbildlich nicht symmetrische Seitenrandkonturen aufweisendes Rückenlehnen-Polsterteil gebildet sein.

Bei dem erfindungsgemäßen Fahrzeugsitz ist es auch möglich, daß die Rückenlehne an beiden Seitenwänden jeweils mit einer Einbuchtung ausgebildet ist, und daß sich die Unterarm-Auflage an der Rückseite zwischen den beiden Seitenrändern erstreckt. Ein solcher Fahrzeugsitz kann bei rechts- und linksgelenkten Fahrzeugen ohne weitere Modifikationen optimal eingesetzt werden.

Weitere Einzelheiten, Merkmale und Vorteile ergeben sich aus der nachfolgenden Beschreibung eines in der Zeichnung dargestellten Ausführungsbeispieles einer Rückenlehne für einen erfindungsgemäßen Fahrzeugsitz. Es zeigen:
- Figur 1: eine räumliche Darstellung einer Rückenlehne in Blickrichtung von schräg oben und von rückwärts,
- Figur 2: eine Ansicht der Rückenlehne gemäß Figur 1 in Blickrichtung des Pfeiles II in Figur 1, d.h. in Blickrichtung von oben,
- Figur 3: eine Ansicht der Rückenlehne in Blickrichtung des Pfeiles III in Figur 1, d.h. in einer Vorderansicht,
- Figur 4: eine Ansicht des formstabilen Rückenlehnenträgers der Rückenlehne gemäß den Figuren 1 bis 3 in Kombination mit der Unterarm-Auflage in Blickrichtung von rückwärts, und
- Figur 5: den Rückenlehnenträger mit der Unterarmauflage gemäß Figur 4 in einer perspektivischen Ansicht von schräg oben und von rückwärts.

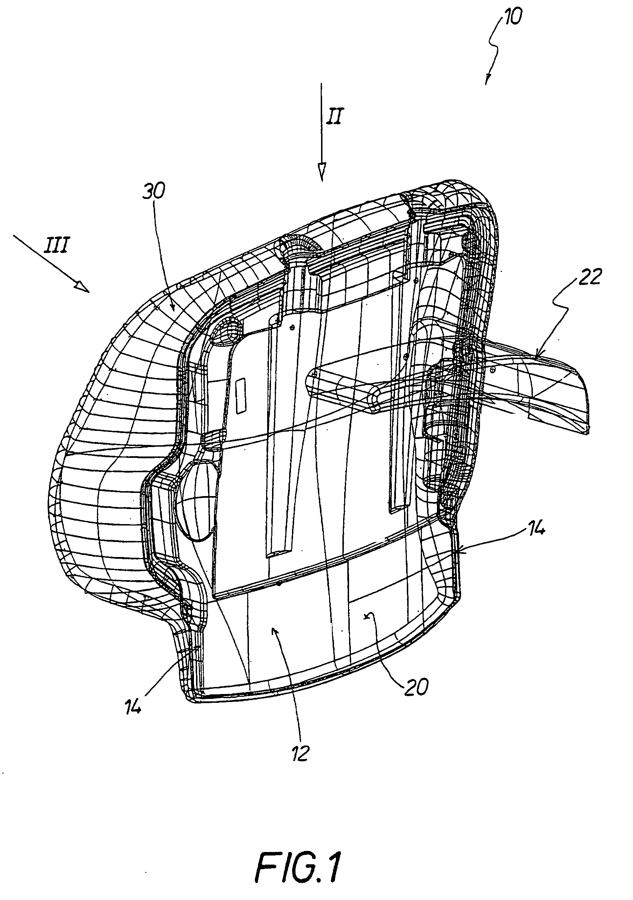

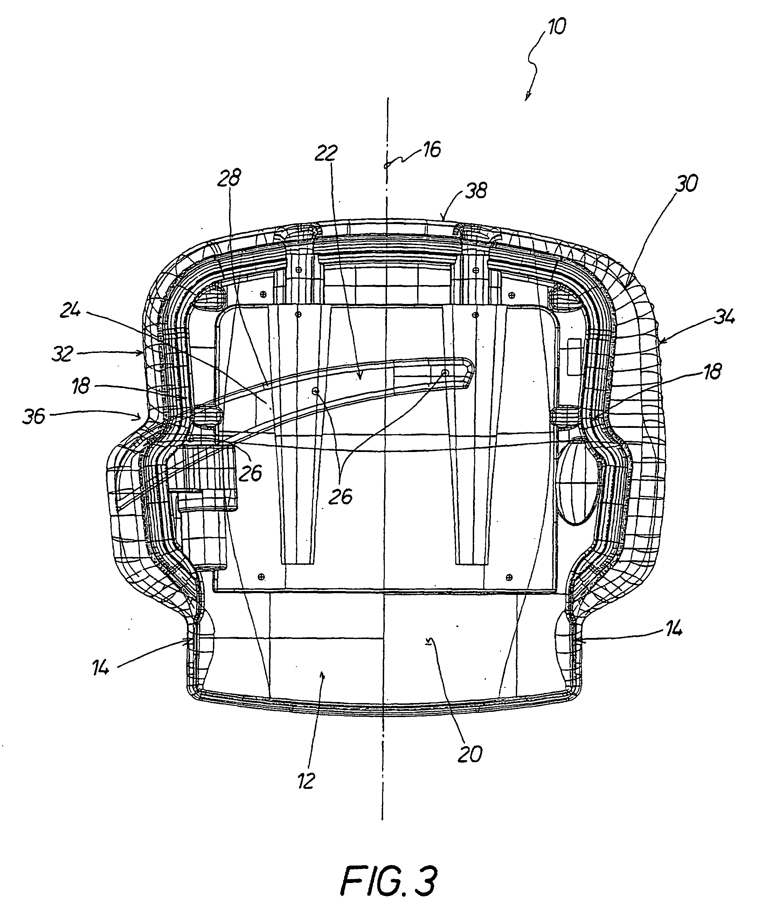

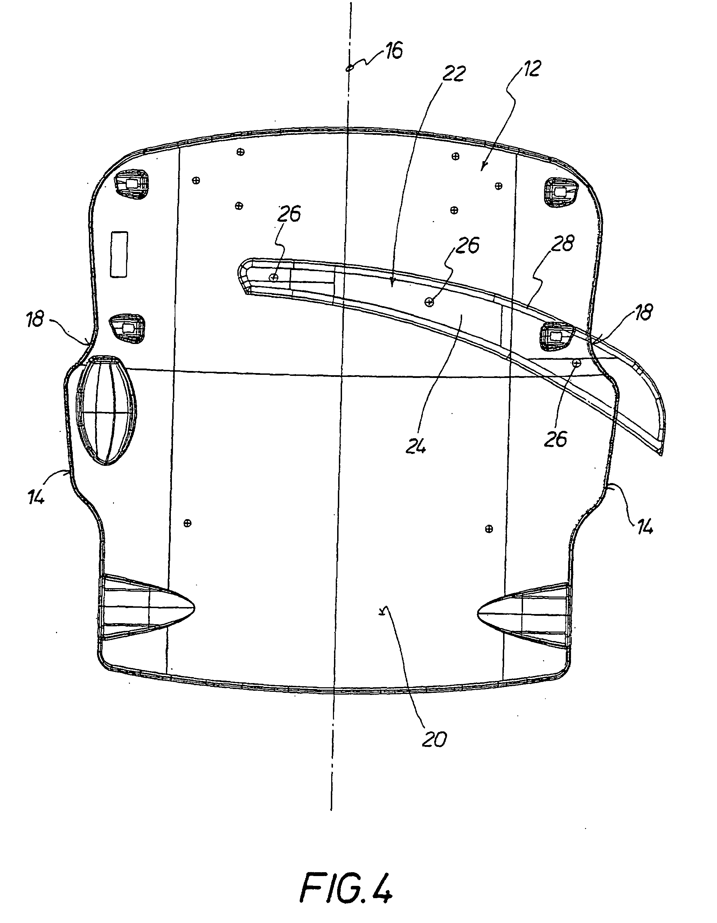

Figur 1 zeigt in einer räumlichen Darstellung eine Rückenlehne 10 eines Fahrzeugsitzes. Die Rückenlehne 10 weist einen formstabilen Rückenlehnenträger 12 auf, bei dem es sich beispielsweise um ein Stanzblechteil handelt. Wie insbesondere aus Figur 4 deutlich ersichtlich ist, weist der Rückenlehnenträger 12 zwei Seitenrandkonturen 14 auf, die zu einer mittigen vertikalen Symmetrielinie 16 (sh. die Figur 3) spiegelbildlich ausgebildet sind. Jeder der beiden Seitenrandkonturen 14 des Rückenlehnenträgers 12 ist oberseitig mit einer Einbuchtung 18 ausgebildet.

An der Rückseite 20 des Rückenlehnenträgers 12 ist eine Unterarm-Auflage 22 vorgesehen. Die Unterarmauflage 22 weist einen Auflagekörper 24 auf, der am Rückenlehnenträger 12 mittels Schrauben 26 befestigt ist. Der Auflagekörper 24 ist mit einer Polsterung 28 bedeckt. Die solchermaßen ausgebildete Unterarmauflage 22 ist am Rückenlehnenträger 12 der Rückenlehne 10 derartig angebracht, daß sie vom jeweiligen Seitenrand 14 bis zu einem mittleren Bereich der Rückseite 20 des Rückenlehnenträges 12 konvex aufgewölbt, schräg nach oben verläuft.

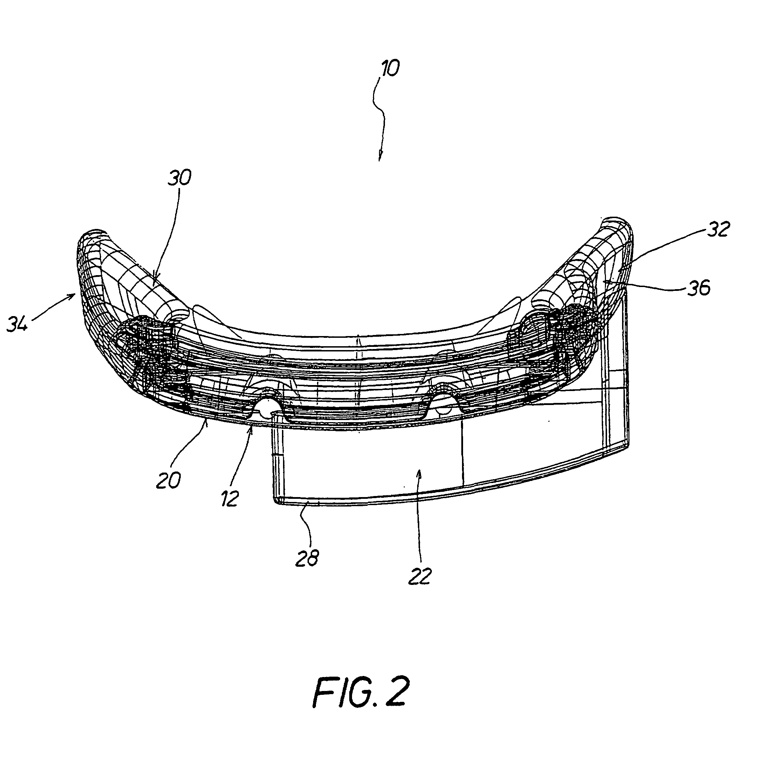

Der Rückenlehnenträger 12 ist vorderseitig mit einem Rückenlehnen-Polsterteil 30 kombiniert (sh. die Figuren 1, 2 und 3). Das Rückenlehnen-Polsterteil 30 ist mit zwei Seitenrandkonturen 32 und 34 gestaltet, die zur mittigen vertikalen Symmetrielinie 16 nicht spiegelbildlich gestaltet sind, wie insbesondere aus Figur 3 deutlich ersichtlich ist. Das heißt, es ist nur die Seitenrandkontur 32 mit einer Seitenrand-Einbuchtung 36 gestaltet. Diese Seitenrand-Einbuchtung 36 des Rückenlehnen-Polsterteiles 30 ist formmäßig an die entsprechende Einbuchtung 18 des formstabilen flächigen Rückenlehnenträgers 12 der Rückenlehen 10 angepaßt, während die andere Seitenrandkontur 34 des Rückenlehnen-Polsterteiles 30 ohne Einbuchtung verläuft und folglich die zugehörige Einbuchtung 18 des Rückenlehnenträgers 12 verdeckt.

Die Unterarm-Auflage 22 erstreckt sich von dem mit der Einbuchtung 36 ausgebildeten Seitenrand 32 zum mittleren Bereich der Rückseite 20 der Rückenlehne 10 schräg nach oben konvex gewölbt.

Die Rückenlehne 10 weist eine solche Höhenabmessung auf, daß sich der Oberrand 38 der Rückenlehne 10 unter der Achsel des entsprechenden Arms befindet, wenn sich der Sitzbenutzer von der nach vorne orientierten Fahrtrichtung nach rückwärts wendet. Der entsprechende Unterarm kommt dann an der Unterarmauflage 22 zur Auflage, so daß ein Ermüden auch nach längerem nach rückwärts gerichtetem Arbeiten vermieden wird Das wirkt sich nicht nur auf den Komfort sondern auch auf die Betriebssicherheit positiv aus.

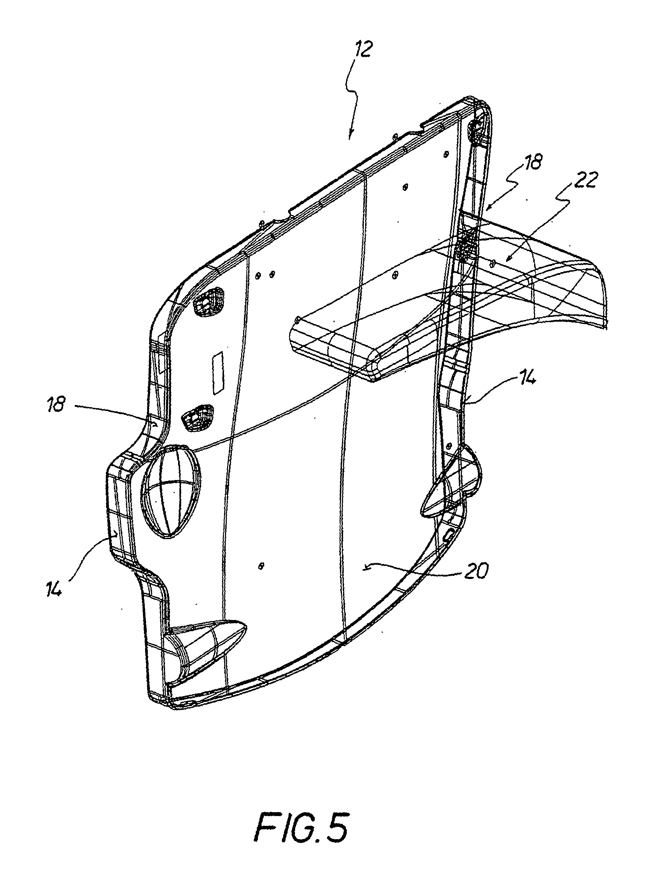

Gleiche Einzelheiten sind in den Figuren 1 bis 5 jeweils mit denselben Bezugsziffem bezeichnet, so daß es sich erübrigt, in Verbindung mit allen Figuren alle Einzelheiten jeweils detailliert zu beschreiben.

## Patentansprüche

1. Fahrzeugsitz mit einer Rückenlehne (10), an deren Rückseite (20) eine Unterarm-Auflage (22) vorgesehen ist,
**dadurch gekennzeichnet,**
**daß** die Rückenlehne (10) an mindestens einem Seitenrand (32, 34) eine Einbuchtung (36) aufweist, die zur Aufnahme eines Oberarms bzw. des dazu benachbarten Schulterbereichs eines Sitzbenutzers dient, wenn sich dieser aus der Fahrtrichtung nach rückwärts wendet, wobei die an der Rückseite (20) der Rückenlehne (10) vorgesehene Unterarm-Auflage (22) der Seitenrand-Einbuchtung (36) zugeordnet ist.

2. Fahrzeugsitz nach Anspruch 1,
**dadurch gekennzeichnet,**
**daß** die Rückenlehne (10) nur an einem seiner beiden Seitenränder (32, 34) eine Einbuchtung (36) aufweist, der an der Rückseite (20) der Rückenlehne (10) eine Unterarmauflage (22) zugeordnet ist.

3. Fahrzeugsitz nach Anspruch 1 oder 2,
**dadurch gekennzeichnet,**
**daß** die Unterarm-Auflage (22) von dem jeweiligen Seitenrand (32) der Rückenlehne (10) bis zu einem mittleren Bereich der Rückseite (20) der Rückenlehne (10) verläuft.

4. Fahrzeugsitz nach Anspruch 3,
**dadurch gekennzeichnet,**
**daß** die Unterarm-Auflage (22) von dem jeweiligen Seitenrand (32) zum mittleren Bereich der Rückseite (20) der Rückenlehne (10) schräg nach oben verläuft.

5. Fahrzeugsitz nach einem der Ansprüche 1 bis 4,
**dadurch gekennzeichnet,**
**daß** die Unterarm-Auflage (22) von dem jeweiligen Seitenrand (32) zum mittleren Bereich der Rückseite (20) der Rückenlehne (10) mit einer konvex aufgewölbten Unterarm-Auflagefläche ausgebildet ist.

6. Fahrzeugsitz nach einem der Ansprüche 1 bis 5,
**dadurch gekennzeichnet,**
**daß** die Rückenlehne (10) einen formstabilen flächigen Rückenlehnenträger (12) aufweist, an dem die Unterarm-Auflage (22) vorgesehen ist, und der vorderseitig mit einem Rückenlehnen-Polsterteil (30) versehen ist.

7. Fahrzeugsitz nach Anspruch 6 ,
**dadurch gekennzeichnet,**
**daß** die Unterarm-Auflage (22) einen formstabilen Auflagekörper (24) aufweist, der mit einer Auflage-Polsterung (28) bedeckt ist.

8. Fahrzeugsitz nach Anspruch 7,
**dadurch gekennzeichnet,**
**daß** der Auflagekörper (24) der Unterarm-Auflage (22) am Rückenlehnenträger (12) der Rückenlehne (10) befestigt ist.

9. Fahrzeugsitz nach Anspruch 7,
**dadurch gekennzeichnet,**
**daß** der Auflagekörper (24) der Unterarm-Auflage (22) ein integrales Bestandteil des Rückenlehnenträgers (12) der Rückenlehne (10) ist.

10. Fahrzeugsitz nach einem der Ansprüche 6 bis 9,
**dadurch gekennzeichnet,**
**daß** der Rückenlehnenträger (12) mit zwei spiegelbildlich symmetrischen Seitenrandkonturen (14) ausgebildet ist.

11. Fahrzeugsitz nach einem der Ansprüche 6 bis 10,
**dadurch gekennzeichnet,**
**daß** die einseitige Einbuchtung (36) der Rückenlehne (10) durch ein spiegelbildlich nicht symmetrische Seitenrandkonturen (32, 34) aufweisendes Rückenlehnen-Polsterteil (30) gebildet ist.

## Claims

1. Vehicle seat having a backrest (10) on the rear side (20) of which an underarm support (22) is provided, **characterized in that** the backrest (10) has an indentation (36) on at least one side edge (32, 34), the indentation serving to receive an upper arm or the shoulder region adjacent thereto of a seat user when the latter turns rearwards from the direction of travel, the underarm support (22) which is provided on the rear side (20) of the backrest (10) being assigned to the side-edge indentation (36).

2. Vehicle seat according to Claim 1, **characterized in that** the backrest (10) has an indentation (36) only on one of its two side edges (32, 34), the said indentation being assigned an underarm support (22) on the rear side (20) of the backrest (10).

3. Vehicle seat according to Claim 1 or 2, **characterized in that** the underarm support (22) runs from the particular side edge (32) of the backrest (10) as far as a central region of the rear side (20) of the backrest (10).

4. Vehicle seat according to Claim 3, **characterized in that** the underarm support (22) runs obliquely upwards from the particular side edge (32) to the central region of the rear side (20) of the backrest (10).

5. Vehicle seat according to one of Claims 1 to 4, **characterized in that** the underarm support (22) is formed with a convexly arched underarm support surface from the particular side edge (32) to the central region of the rear side (20) of the backrest (10).

6. Vehicle seat according to one of Claims 1 to 5, **characterized in that** the backrest (10) has a dimensionally stable, extensive backrest support (12) on which the underarm support (22) is provided, and which is provided on the front side with a backrest cushion part (30).

7. Vehicle seat according to Claim 6, **characterized in that** the underarm support (22) has a dimensionally stable support body (24) which is covered by support padding (28).

8. Vehicle seat according to Claim 7, **characterized in that** the support body (24) of the underarm support (22) is fastened to the backrest support (12) of the backrest (10).

9. Vehicle seat according to Claim 7, **characterized in that** the support body (24) of the underarm support (22) is an integral part of the backrest support (12) of the backrest (10).

10. Vehicle seat according to one of Claims 6 to 9, **characterized in that** the backrest support (12) is formed with two side-edge contours (14) which are symmetrical in a mirror-inverted manner.

11. Vehicle seat according to one of Claims 6 to 10, **characterized in that** the indentation (36) on one side of the backrest (10) is formed by a backrest cushion part (30) having side-edge contours (32, 34) which are not symmetrical in a mirror-inverted manner.

## Revendications

1. Siège de véhicule du type comportant un dossier (10) sur le côté postérieur duquel (20) est prévu un appui-avant-bras (22), **caractérisé en ce que** le dossier (10), sur au moins un bord latéral (32, 34), présente un renfoncement (36) qui sert à recevoir la partie supérieure du bras ou la région voisine de celle-ci de l'épaule de l'occupant du siège quand celui-ci s'incline vers l'arrière en s'écartant de la direction du trajet, l'appui-avant-bras (22) prévu sur le côté postérieur (20) du dossier étant disposé dans le renfoncement (36) du bord latéral.

2. Siège de véhicule selon la revendication 1, **caractérisé en ce que** le dossier (10) ne présente que sur un seul de ses deux bords latéraux (32, 34) un renfoncement (36) dans lequel est disposé un appui-avant-bras (22) sur le côté postérieur (20) du dossier.

3. Siège de véhicule selon la revendication 1 ou la revendication 2, **caractérisé en ce que** l'appui-avant-bras s'étend depuis le bord latéral (32) considéré du dossier jusqu'à une région intermédiaire du côté postérieur (20) du dossier (1).

4. Siège de véhicule selon la revendication 3, **caractérisé en ce que** l'appui-avant-bras (22) s'étend obliquement vers le haut depuis le bord latéral (32) considéré jusqu'à la région intermédiaire du côté postérieur (20) du dossier.

5. Siège de véhicule selon l'une quelconque des revendications 1 à 4, **caractérisé en ce que** l'appui-avant-bras (22) s'étend depuis le bord latéral (32) considéré du dossier jusqu'à une région intermédiaire du côté postérieur (20) du dossier (10) avec une surface d'appui de l'avant-bras galbée de façon convexe.

6. Siège de véhicule selon l'une quelconque des revendications 1 à 5, **caractérisé en ce que** le dossier (10) comporte un support de dossier (12) à surface de forme stable sur laquelle est prévu l'appui-avant-bras (22) et qui est prévu sur la face avant avec une portion rembourrée (30) du dossier (10).

7. Siège de véhicule selon la revendication 6, **caractérisé en ce que** l'appui-avant-bras (22) comporte un corps d'appui de forme de stable (24) qui est recouvert par un rembourrage d'appui (28).

8. Siège de véhicule selon la revendication 7, **caractérisé en ce que** le corps d'appui (24) de l'appui-avant-bras (22) est fixé au support de dossier (12) du dossier (10).

9. Siège de véhicule selon la revendication 7, **caractérisé en ce que** le corps d'appui (24) de l'appui-avant-bras (22) constitue un composant en une seule pièce du support de dossier (12) du dossier (10).

10. Siège de véhicule selon l'une quelconque des revendications 6 à 9, **caractérisé en ce que** le support de dossier (12) est réalisé avec deux contours latéraux (14) présentant une symétrie spéculaire.

11. Siège de véhicule selon l'une quelconque des revendications 6 à 10, **caractérisé en ce que** le renfoncement sur un seul côté (36) du dossier (10) constitue une portion rembourrée (30) du dossier présentant des contours latéraux (32, 34) qui ne sont pas symétriques de façon spéculaire.
